(19) Europäisches Patentamt

European Patent Office

Office européen des brevets

(11) **EP 2 169 566 A1**

(12) **EUROPEAN PATENT APPLICATION**

(43) Date of publication:
**31.03.2010 Bulletin 2010/13**

(51) Int Cl.:
***G06F 17/30*** *(2006.01)*

(21) Application number: **09012337.3**

(22) Date of filing: **29.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.09.2008 US 240756**

(71) Applicant: **The Nielsen Company (US), LLC Schaumburg, IL 60173 (US)**

(72) Inventor: **Deliyannis, Alexandros Tampa Florida 33626 (US)**

(74) Representative: **Samson & Partner Widenmayerstrasse 5 80538 München (DE)**

(54) **Methods and apparatus to automatically crawl the internet using image analysis**

(57) Methods and apparatus to automatically crawl the Internet using image analysis are disclosed. An example method to visually identify components of a web page includes rendering a web page in a web browser to generate an image, and visually analyzing at least a portion of the image with a machine to detect a region containing a possible web page component. The example method further includes automatically determining a type of the detected web page component and storing the web page component type and a location of the portion of the web page.

FIG. 6

EP 2 169 566 A1

**Description**

FIELD OF THE DISCLOSURE

This disclosure relates generally to web crawling and, more particularly, to methods and apparatus to automatically crawl the Internet using image analysis.

BACKGROUND

Web sites are increasingly turning to more visual and interactive layouts to attract consumers and promote a particular image. Such web sites utilize technologies such as "Flash"-based media, which has rich multimedia capabilities and can provide users with a pleasant visual experience, but does not have source code as readily available to a viewer of the web page as previous HTML-based pages. Players for "Flash"-based content may be embedded into a web page and call media information that is displayed in a web browser showing the web page.

BRIEF SUMMARY

Methods and apparatus to automatically crawl the Internet using image analysis are described herein. Some example methods to visually identify components of a web page are described, which include rendering a web page to generate an image, visually analyzing at least a portion of the image with a machine to detect a region containing a possible web page component, automatically determining a type of the possible web page component, and storing the web page component type and a location of the portion of the web page.
Some example methods further include accessing one or more hints, which include location information corresponding to the portion of the image to be visually analyzed. In some examples, the hints are based on a previously-rendered web page and/or are based on a web page template. In some example methods the type includes at least one of a button, media content, a media player control, a hyperlink, a text area, an advertisement, an image, or a Flash component. In some examples, the method also includes rendering a second web page to generate a second image in response to determining the type is a hyperlink. In some examples, automatically determining the type includes performing image analysis of the region.
In some examples, the image analysis includes at least one of edge detection; image correlation; or initiating an action in the region of the web page, and monitoring to detect a response to the action. In some additional examples, the portion is a Flash component. Some example methods also include generating a web page template corresponding to the web page. In some examples, generating the web page template includes storing the web page component type and the location in a table. Some example methods also include identifying media content associated with the web page component.
Some example apparatus to identify components in a web page are also described, where the example apparatus include an image generator to render an image of a web page based on web page information, an image analyzer to automatically analyze the image to detect a web page component in the image and to generate location information corresponding to a location of the web page component in the image, and a component identifier to automatically determine a type of the web page component by analyzing the image.
Some example apparatus also include a template reader to access a web page template. In some examples, the apparatus also includes a hint analyzer to identify one or more locations to be analyzed based on the web page template. Some example apparatus further include a storage device to store the type of the web page component and the location information. In some examples, the component identifier is to store the type of the web page component and the location information in a web page template in the storage device. In some additional examples, the component identifier is to determine a second component type in a second rendered web page based on location information in the template. In some example apparatus, the component identifier is to modify at least one of the type of the web page component or the location information based on the second component type.
Example articles of manufacture are described, which include machine-readable instruction to cause a machine to render a web page to generate an image, visually analyzing at least a portion of the image to detect a region containing a possible web page component, automatically determine a type of the detected web page component, and store the web page component type and a location of the portion of the web page.
In some examples, the instructions further cause the machine to access hints, including location information corresponding to the portion of the image to be visually analyzed. In some additional examples, the hints are based on a previously-rendered web page and/or are based on a web page template. In some examples, the type includes at least one of a button, media content, a media player control, a hyperlink, a text area, an advertisement, an image, or a Flash component.
In some examples, the instructions further cause the machine to render a second web page to generate a second image in response to determining the type is a hyperlink. Some examples are described where automatically determining the type includes performing image analysis of the region. In some examples, image analysis includes at least one of edge detection; image correlation; or initiating an action in the portion of the web page corresponding to the region, and monitoring to determine a response to the action. In some examples, the portion of the web page is a Flash component. Some example instructions further cause the machine to generate a web page template corresponding to the web page. In some examples, generating the web page template includes storing the web page component type and the location in a table. Some example instructions further cause the machine to identify media content associated with the web page component.

Some additional example methods to visually analyze a web page include rendering a web page to generate an image, accessing a hint corresponding to the web page, visually analyzing the image based on the hint to automatically determine a type of a web page component, and selectively modifying a web page template based on the hint and the type of the web page component.

In some examples, the method also includes accessing the web page template, wherein the web page template includes a plurality of hints. Some example methods also include generating the web page template, wherein the web page template includes a plurality of hints. Some example methods also include rendering a second web page to generate a second image, accessing a hint from the generated web page template, and visually analyzing the second image to determine a type of a second web page component corresponding to the hint. In some examples, the hint includes location information corresponding to at least a portion of the image. In some example methods, determining the type includes performing image analysis of the portion of the web page. In some examples, the type includes at least one of a button, media content, a media player control, a hyperlink, a text area, an advertisement, an image, or a Flash component.

Some example web crawlers to visually analyze a web page are also described, where the web crawlers include an image generator to render a web page to generate an image, a hint analyzer to access a hint corresponding to the web page, and a component identifier to visually analyze the image based on the hint to determine the type of a web page component, and to selectively modify a web page template based on the hint and the type of the web page component.

Some example web crawlers also include a template reader to access the web page template, wherein the web page template includes a plurality of hints. In some examples, the component identifier generates the web page template and the web page template includes a plurality of hints. In some examples, the image generator renders a second web page to generate a second image, the hint analyzer accesses a hint from the generated web page template, and the component identifier visually analyzes the second image to determine a type of a second web page component corresponding to the hint. In some example web crawlers, the hint includes location information corresponding to at least a portion of the image. In some examples, determining the type includes performing image analysis on at least a portion of the image. In some examples, the type includes at least one of a button, media content, a media player control, a hyperlink, a text area, an advertisement, an image, or a Flash component.

Some additional articles of manufacture are also described, which include machine readable instructions to cause a machine to render a web page to generate an image, access a hint corresponding to the web page, visually analyze the image based on the hint to automatically determine a type of a web page component, and selectively modify a web page template based on the hint and the type of the web page component.

Some example instructions further cause the machine to access the web page template, where the web page template includes a plurality of hints. Some example instructions further cause the machine to generate the web page template, where the web page template includes a plurality of hints. In some examples, the instructions further cause the machine to render a second web page to generate a second image, access a hint from the generated web page template, and visually analyze the second image to determine a type of a second web page component corresponding to the hint. In some examples, the hint includes location information corresponding to at least a portion of the image. In some example instructions determining the type includes performing image analysis on at least a portion of the image. In some examples, the type includes at least one of a button, media content, a media player control, a hyperlink, a text area, an advertisement, an image, or a Flash component.

BRIEF DESCRIPTION OF THE DRAWINGS

FIG. 1 illustrates an example system to crawl web pages in the Internet.

FIG. 2 illustrates an example web page containing components that may be identified via visual analysis.

FIG. 3 is a block diagram of an example web crawler configured to crawl the Internet using image analysis.

FIG. 4 is a table representative of example template data stored in a storage device.

FIG. 5 is a flowchart representative of example machine readable instructions which may be executed to visually analyze web pages.

FIG. 6 is a flowchart representative of example machine readable instructions which may be executed to identify types of components in a visually analyzed web page.

FIG. 7 is a flowchart representative of example machine readable instructions which may be executed to identify types of components in a visually analyzed web page based on a web page template.

FIG. 8 is a diagram of an example processor system that may be used to execute some or all of the example machine readable instructions of FIGS. 5, 6, and/or 7 to implement the example system of FIG. 1 and/or the example web crawler of FIG. 3.

DETAILED DESCRIPTION

The example systems, methods, apparatus, and articles of manufacture described herein are generally used to identify components in a web page using image analysis. The systems, methods, apparatus, and articles of manufacture may be implemented using a web crawler adapted to load web pages and collect information contained in the web page. The web crawler is also adapted to recognize human-recognizable information that is difficult or impossible to recognize using previous web crawling techniques. To accomplish this, an example web crawler renders a web page in a web browser to generate an image, and performs image analysis techniques to determine one or more location(s) within the image that may correspond to relevant or interesting information, depending on the application. When such location(s) or portion(s) of the web page have been identified, the example web crawler utilizes image analysis techniques to determine the type of web page component, such as a button, media content, a media player control, a hyperlink, a text area, an advertisement, an image, or other relevant web page components corresponding to such location(s) and/or portion(s).

In another example described herein, a web crawler is adapted to determine web page components and types of the web page components with assistance from hints. Such hints may be provided by a web page template or other sources. The web page template describes one or more locations in a rendered image of a corresponding web page where the web crawler may expect to find a web page component or a particular type of web page component. The web crawler loads the location(s) or hint(s) from the template and determines the type(s) of any component(s) found in the location(s).

The example web crawlers described herein are advantageously provided with the ability to recognize human-readable web page information that was unrecognizable by previous web crawlers. Web crawlers traditionally rely on the HTML source code of a web page to extract the information from the web page. However, because source code for Flash-based web content does not have source code available, the most relevant or interesting information can sometimes be hidden from the web crawler. The web crawler can determine that Flash content is present in the web page, but is unable to determine what is displayed, or any hyperlinks that may be present in the Flash content to other web pages. Further, the example web crawlers may crawl web pages having similar structures or layouts very efficiently by building or utilizing one or more template(s) corresponding to the web pages.

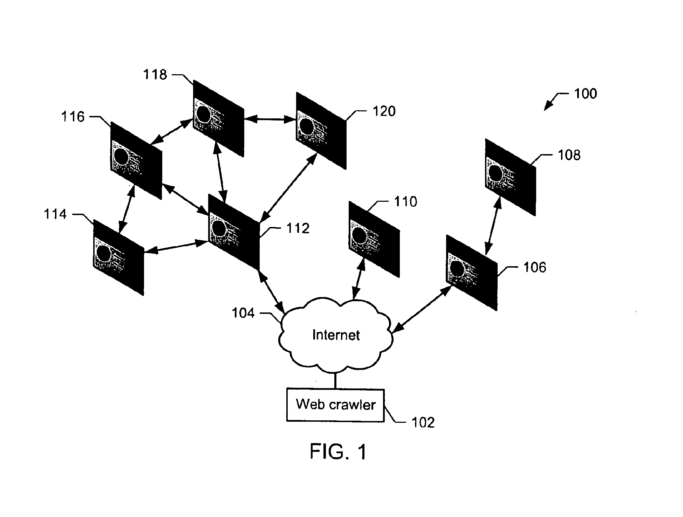

FIG. 1 illustrates an example system 100 to crawl web pages in the Internet 104 (e.g., the World Wide Web or the World Wide Web 2). The example system 100 includes a web crawler 102 communicatively coupled to the Internet 104 (i.e., Internet). The Internet 104 includes vast numbers of web pages 106-120, with widely varying purposes, content, and layouts. Oftentimes, a web page (106) will include one or more hyperlinks to another web page (e.g., the web page 108) to facilitate a user's ability to "surf" from the first web page 106 containing a first set of content to the next web page 108 to view the next set of content. Linked web pages may be related in a set (e.g., within a website defined by a domain) or unrelated (e.g., in different domains). The linking of pages is a fundamental concept of the Internet. Some web pages 112-120 are very similar in layout (e.g., have similarly shaped areas for content) but have different content inserted into those similarly shaped and/or positioned areas. Employing a similar layout (e.g., similarly shaped and positioned content areas) in the web pages (e.g., web pages 112-120) improves the user experience and facilitates ease of navigation by offering users a recognizable structure when visiting the web pages 112-120.

Web crawling, generally, is the use of a computer or other device to systematically and/or randomly load web pages from the Internet to obtain and/or update information. Some web crawlers are used for such purposes as indexing web pages for search purposes. Web crawling may also be used for identification of media content that is publicly available on the Internet via web sites such as YouTube.

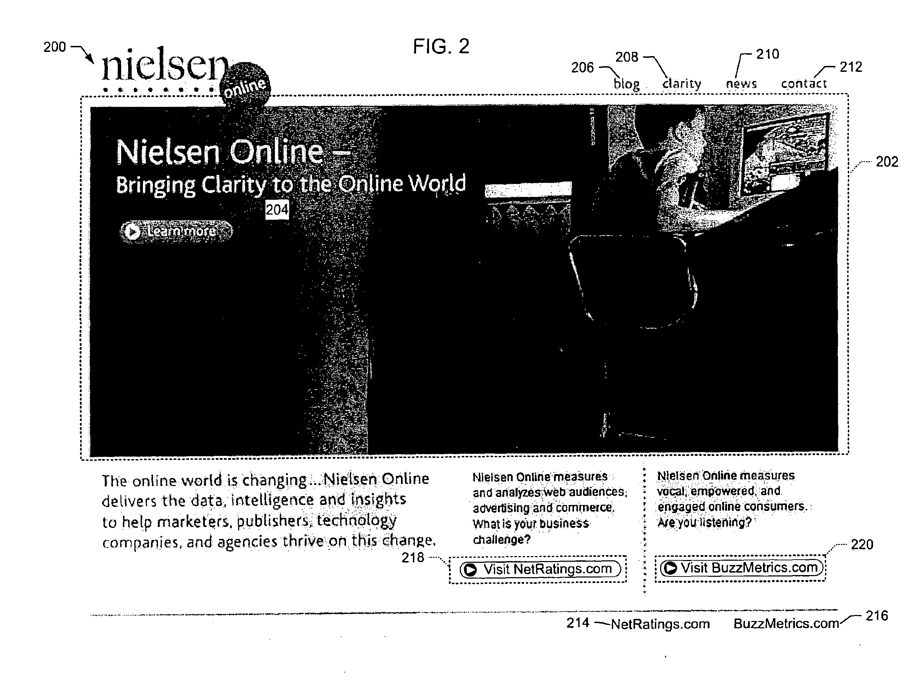

FIG. 2 illustrates an example web page 200 containing components that may be identified via visual analysis. The example web page 200 includes a media player 202 (e.g., Flash) that displays a multimedia presentation that may include, for example, audio, video, advertising, hyperlinks, or other interactive content. The example media player 202 includes a button 204. When selected (e.g., by "clicking on" the button 204 with a mouse), the browser is directed to another web page.

The example web page 200 further includes several hyperlinks 206-220 that point to different web pages, respectively, and, thus, cause a browser to navigate to the corresponding web page when selected by the user. In contrast to the media player 202 and the button 204, the characteristic(s), name(s), and/or destination(s) of the hyperlinks 206-220 (e.g., uniform resource locators (URLs)) may be determined by the source code for the web page 200. For example, the hyperlink 218 is represented by HTML code: "<a href="http: //www.netratings.com/" class="homeButtonLink" style="background- image: url (images/ site_ net.gif)" target="_ blank"></a>." A user sees the hyperlink 218 as a button on the web page 200 because the HTML code includes a call to an image to represent the hyperlink 218. In contrast, the media player 202 is called by the HTML code, and uses external data to generate the content visible and/or audible to the user. The content generated by this external data is not represented by HTML code.

While a browser can determine the destination of the hyperlinks 206-220 without selecting them and navigating to the respective targets, the browser is unable to determine the destination of the button 204 without selecting (i.e., activating) it.

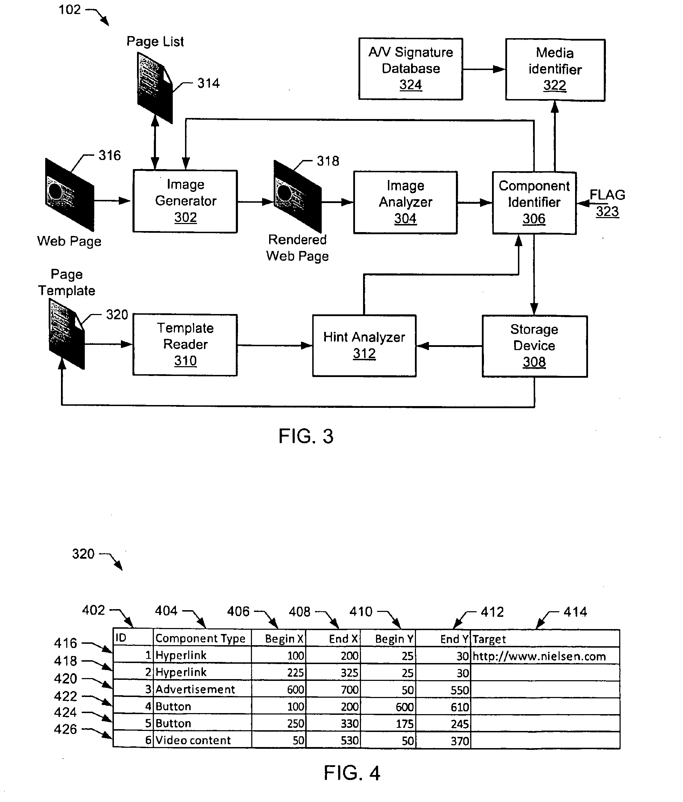

FIG. 3 is a block diagram of the example web crawler 102 of FIG. 1. The example web crawler 102 is configured to crawl the Internet 104 using image analysis. The example web crawler 102 includes an image generator 302, an image analyzer 304, a component identifier 306, a storage device 308, a template reader 310, and a hint analyzer 312. As mentioned above, the web crawler 102 is adapted to identify components of web pages (e.g., the web pages 106-120 of FIG. 1) using image analysis.

The example image generator 302 is provided with a list 314, containing one or more web pages for the web crawler 102 to identify and/or collect information from. The web pages described in the list 314 may be listed as internet protocol (IP) addresses, uniform resource locators (URLs), or any other descriptive method to instruct the image generator 302 to load a particular web page. The list 314 may further include arguments or instructions identifying different content to be accessed at the same web page location. The image generator 302 receives a first URL corresponding to a web page 316 to load from the list 314. The image generator 302 calls the web page 316 and renders the web page 316 based on received web page information that describes the web page 316. Example web page information may include HTML code, XML code, Java applets, JavaScript, or any other computer-readable code that may be employed to generate some portion and/or all of a web page. The image generator 302 may be implemented using, for example, a commercially available web browser such as any version of Microsoft Internet Explorer, Mozilla Firefox, Apple Safari, or any other commercial web browser. Alternatively, an image generator 302 may be constructed to render the web page 316 in a convenient manner or to provide particular types of information or web page renderings based on the web page information describing the web page 316.

An example rendered web page 318 forms a human-recognizable image, such as would be displayed on a monitor to a user. The image generator 302 sends the rendered web page 318 to the image analyzer 304 (with or without actually displaying the page 318 on a display device). The image analyzer 304 applies image analysis techniques to the rendered web page 318 to identify one or more location(s) where web page components of interest may be found. The location(s) may be generated, for example, as coordinates of the image and/or ranges near a selected point within the image.

The rendered web page 318 and the location(s) determined by the image analyzer 304 are then sent to the component identifier 306. The component identifier 306 analyzes the rendered image on a location by location basis to identify whether there is actually a web page component in the defined area(s) of the location(s). If such a web page component is found, the component identifier 306 identifies a type of the web page component. The component identifier 306 stores the type of the web page component in the storage device 308 in association with additional information corresponding to the web page component, such as the content (e.g., text). For web page components such as media content (e.g., audio, video), the component identifier 306 is provided with a media identifier 322 to identify the media content. If the media identifier 322 is able to identify the media content (e.g., source of an audio/video clip, time segment within the source, owner of the clip, etc.), the media identifier 322 provides the component identifier 306 with the media information, which is stored in the storage device 308 in association with the web page component.

The example component identifier 306 of FIG. 3 determines the type of a web page component via image analysis techniques. Some example techniques that may be used are edge detection and/or image correlation. However, it should be noted that any image analysis technique may be used or adapted for use in determining the web page component type.

Another example technique that may be used to determine the type of a web page component is an "action-reaction" technique. In some examples, the component identifier 306 receives the location(s) from the image analyzer 304. To attempt to determine the type of object associated with such a location, the component identifier 306, initiates an action within the location (e.g., by programmatically simulating an action such as a mouse click). After initiating the action, the component identifier 306 monitors the web page, the image generator 302, and/or an operating system running the image generator 302, to determine if the action results in a reaction. For example, in response to a mouse click event (e.g., an action) over an object, the object may respond by loading another web page, playing media content, selecting a check box or radio button, etc. If such a reaction occurs, the component identifier 306 records the reaction and uses the reaction to determine the type of object by, for example, accessing a look-up table that maps reactions to object types (e.g., an opening a new web page reaction may indicate a button, the opening of a media player may indicate media content, a change in volume may indicate a volume control, etc). If there is no reaction, the component identifier 306 may initiate more of the same types of actions at different points within the subject location to thoroughly search the object, or the component identifier 306 may initiate other types of actions (e.g., keyboard events, mouse drags, right mouse clicks) to attempt to illicit a reaction. As noted, the component identifier 306 may determine the type of component in the location based at least in part on reactions. Once all actions within a location are attempted without any reaction, then the component identifier 306 may identify the object in the location as a nonfunctional type, such as text or images.

In some cases, web sites may have a very similar layout or structure. It is desirable to determine the layout of a page to be analyzed because knowing such layouts can increase the efficiency of the web crawling process. The layout of a web page can be expressed in terms of a template of the web page. The template of the illustrated example preferably identifies location(s) where certain types (or any type) of web page component(s) can be expected to reside. A template is advantageous in crawling multiple web pages (e.g., the web pages 112-120 of FIG. 1) of similar layout. Therefore, a template may be provided to the web crawler 102 and/or the web crawler may generate a template for later use.

To generate a web page template 320, the component identifier 306 is provided with an instruction to generate a template based on identified web page components (e.g., a flag 323). The flag 323 may be set by, for example a user to instruct the component identifier 306 to build and/or add to a web page template 320. In response to the instruction, the component identifier 306 stores the web page components identified by the image analyzer 304 in the storage device 308 as a web page template 320. An example template 320 is shown in FIG. 4. The example template 320 is a table, which includes columns for component identification (ID) 402, component type 404, beginning X coordinate 406 (Begin X), ending X coordinate 408 (End X), beginning Y coordinate 410 (Begin Y), ending Y coordinate 412 (End Y), and target 414 (e.g., an address to which the corresponding component points, if applicable). The coordinate fields 406-412 provide a boundary within which the component identifier 306 may find the component type.

An example row 416 is populated by the component identifier 306 upon identifying a web page component. The component identifier 306 analyzes a portion of the rendered web page 318 that is identified by the image analyzer 304 as potentially containing a web page component. The component identifier 306 analyzes the portion (e.g., (100,25) to (200,30) of the rendered web page 318) and determines that a hyperlink is present that points to an address. The component identifier 306 stores the component type 404 (i.e., hyperlink), location coordinates 406-412, and target 414 (e.g., the pointed to address) in row 416 with an ID 402 of 1. The component identifier 306 identifies another component in another portion provided by the image analyzer 304, populates the example table 400 with the component information in row 418, and continues population of the table 400 for rows 420-426.

The table 400 may be updated to increase the accuracy of the template by analyzing multiple similar web pages to determine which components are consistently present. For example, two similar web pages (e.g., web pages 116 and 118) may be analyzed sequentially to generate a template. First, the first web page 116 is analyzed by the image analyzer 304 and the component identifier 306 to generate a template (e.g., the template table 400 of FIG. 4), and rows 416-426 are populated by analyzing the web page 116 and identifying the components. Next, the component identifier 306 utilizes the generated template 400 to analyze the second web page 118. In the illustrated example, inconsistencies in the template data are erased from the table 400, leaving only data in the template table 400 that is consistent between the web pages 116 and 118. For example, if a hyperlink (e.g., in row 418) in the web page 116 has a first target web address, and the web page 118 has a hyperlink in the same location with a second target web address, the target field 414 of row 418 is deleted when the component identifier 306 determines the target of the hyperlink in the web page 118. Deleting the target field 414 of the row 418 shows that web pages 116 and 118 both have hyperlinks in the same particular portion of the respective rendered pages, but those hyperlinks each point to different target web pages.

To use a page template 320, the web crawler 102 of the illustrated example is provided with a template reader 310. The template reader 310 generates hints from a page template 320. The page template 320 may be loaded into the template reader 310 from an external source or from the storage device 308. An example template reader 310 is a plug-in module of the type that interfaces with an image generator 302 to perform a function not native to the image generator 302. It should be noted that other implementations of a user-generated page template 320 are possible. For instance, an example page template 320 may be a user-generated Perl language script that is loaded into the template reader 310. In addition, the page template 320 may be a script or other format generated based on template data stored in the storage device 308.

The template reader 310 of the illustrated example provides hints to the hint analyzer 312 based on the page template 320. The hint analyzer 312 then determines hint locations (e.g., coordinates) and/or expected component types for each hint and provides the information to the component identifier 306.

Hints can be used to concentrate on one or more particular portions of the rendered web page 318, potentially without identification of the portion(s) by the image analyzer 304. One image analysis algorithm to analyze a portion defined by a hint is described in Equation 1:

$$R(x, y) = \frac{sum_{x',y'}[T(x', y') \bullet I(x + x', y + y')]}{\sqrt{sum_{x',y'}T(x', y')^2 \bullet sum_{x',y'}I(x + x', y + y')^2}} \quad \text{(Eq. 1)},$$

wherein I denotes the web page image, T denotes a template, x and y denote the coordinates of the pixel being checked, and R denotes the result. The summation of Equation 1 is performed over the template and/or over the image patch x' = 0...w-1, y' = 0...h-1 (where w is the width and h is the height of the portion defined by the hint). Example image processing software is included in the OpenCV library. However, any image processing method, technique, and/or algorithm may be used in combination with, or as a substitute for, the above-described example techniques.

Modem commercial web pages (e.g., the web page 316) often contain some form of media content, which may be identified by a media identifier 322. The media identifier 322 is called by the component identifier 306 when a web page component is identified by the component identifier 306 as having a media type. The component identifier 306 provides the coordinate information in which the media content resides for the media identifier 322 to monitor and determine, for example, an audio and/or video signature. The audio and/or video signature(s) may then be compared by the media identifier 322 to a database of known audio/video signature(s) 324 to identify the media content. If the media content is identified, identification information (e.g., clip name, owner) is stored in the storage device 308 with the component type and the location information where the component is found. Alternatively or additionally, the signature (s) for the media content may be stored in the storage device 308 for later identification.

While an example manner of implementing the web crawler 102 of FIG. 3 is illustrated in FIGS. 3, one or more of the elements, processes and/or devices illustrated in FIG. 3 may be combined, divided, re-arranged, omitted, eliminated and/or implemented in any other way. Further, the example image generator 302, the example image analyzer 304, the example component identifier 306, the example storage device 308, the example template reader 310, the example hint analyzer 312 and/or, more generally, the example web crawler 102 of FIG. 3 may be implemented by hardware, software, firmware and/or any combination of hardware, software and/or firmware. Thus, for example, any of the image generator 302, the image analyzer 304, the component identifier 306, the storage device 308, the template reader 310, the hint analyzer 312 and/or, more generally, the web crawler 102 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example web crawler 102, the example image generator 302, the example image analyzer 304, the example component identifier 306, the example storage device 308, the example template reader 310, and/or the example hint analyzer 312 are hereby expressly defined to include a tangible medium such as a memory, DVD, CD, etc. storing the software and/or firmware. Further still, the example web crawler 102 of FIG. 3 may include one or more elements, processes and/or devices in addition to, or instead of, those illustrated in FIG. 3, and/or may include more than one of any or all of the illustrated elements, processes and devices.

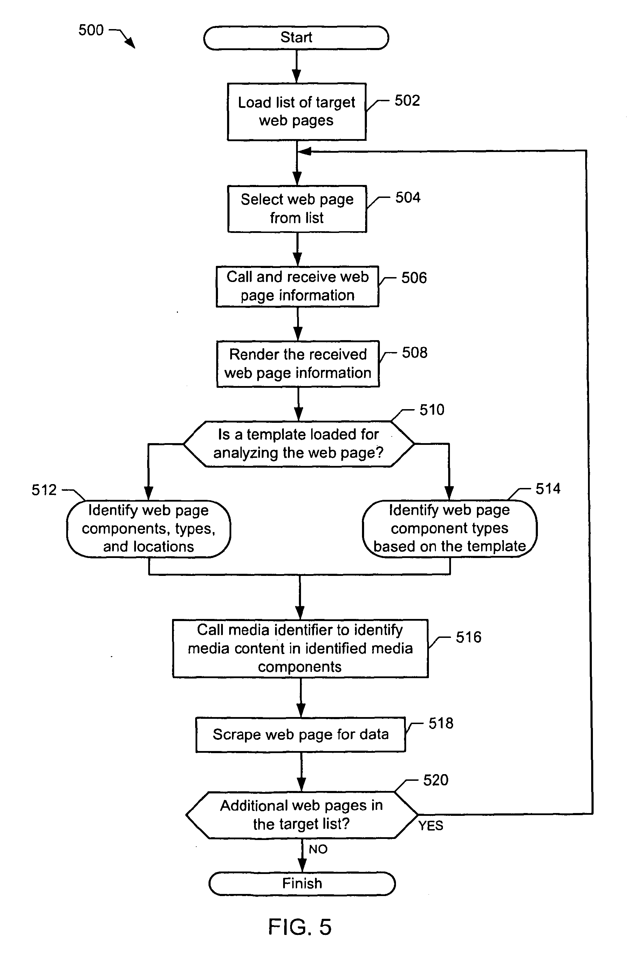

FIG. 5 is a flowchart representative of example machine readable instructions 500 which may be executed to visually analyze web pages. The instructions 500 may be executed to implement the example web crawler 102 of FIG. 3. As noted above, the example web crawler 102 functions to automatically crawl the Internet 104 using image analysis techniques, and to identify components in the crawled web pages.

The example instructions 500 of FIG. 5 begin with the web crawler 102 loading a list 314 of target web pages to crawl (block 502). The image generator 302 selects a web page from the list 314 (e.g., the first web page in the list) (block 504). Next, the image generator 302 requests the web page 316 over the Internet and receives web page information for the called web page 316 (block 506). Example web page information includes source code and external visual content (e.g., Flash). On receiving the web page information, the image generator 302 renders the web page information into a visual format, reflecting how the web page information would be rendered onto a monitor for viewing (block 508).

If a page template 320 has not been loaded into the template reader 310 for use in analyzing the web page 316 (block 510), the image analyzer 304 and the component identifier 306 identify the web page components and corresponding types and locations of the web page components in the rendered web page 318 (block 512). Conversely, if a page template is loaded into the template reader 310 (block 510), the component identifier 306 identifies web page components, and the corresponding component types and locations based on the template (block 514).

When the component identifier 306 has identified the components in the rendered web page in block 512 or block 514, the component identifier 306 may call the media identifier 322 to identify any media content associated with components having types identified as media (block 516). The component identifier 306 and/or the image analyzer 304 further scrape the web page for data (block 518). Scraping the web page may include determining keywords from text, identifying advertisers and/or media content, and/or collecting other relevant or useful data and/or meta data. If there are more web pages in the web page target list 314 (block 520), control returns to block 504 to select another web page from the list. If there are no more web pages in the target list 314, the example instructions 500 end execution.

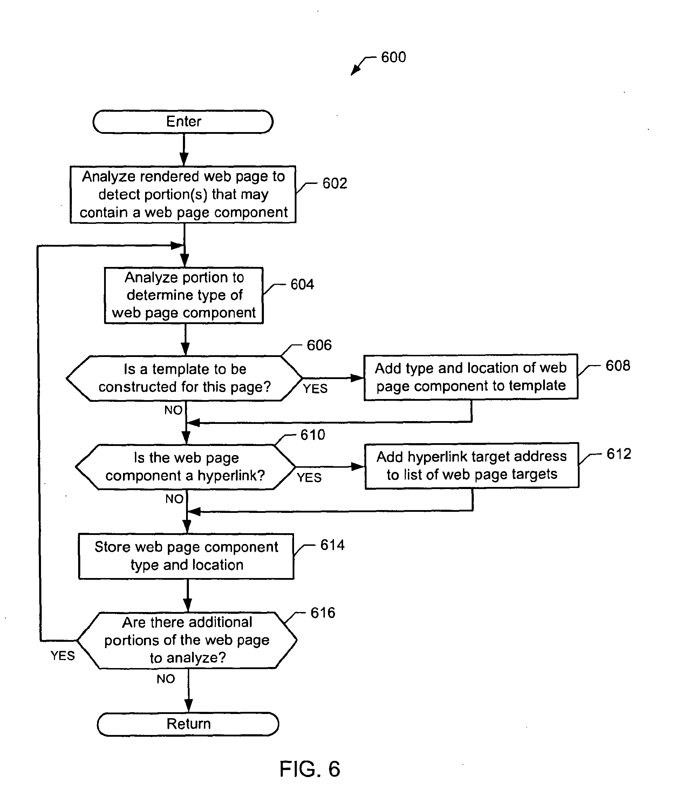

FIG. 6 is a flowchart representative of example machine readable instructions 600 which may be executed to identify types of components in a visually analyzed web page.
The example instructions 600 may be executed to implement the example image generator 302, the example image analyzer 304, the example component identifier 306, and/or the example storage device 308 of FIG. 3. Specifically, the instructions 600 may be used to execute block 512 of the example machine readable instructions 500 of FIG. 5 to identify web page components and corresponding types and locations. In this example, the instructions 600 are called from block 510 of FIG. 5 when there is not a template loaded to analyze the rendered web page 318.

The image analyzer 304 analyzes the rendered web page 318 to detect one or more portions that may contain a web page component (block 602). Next, the component identifier 306 analyzes a portion (e.g., coordinates corresponding to a section of the rendered web page 318) to determine a type of the web page component (block 604). Example component types include a button, media content, a media player control, a hyperlink, a text area, an advertisement, an image, or other types of web page components. After identifying the component type (block 604), the component identifier 306 determines whether a template is to be constructed for the web page (block 606). As mentioned above, the component identifier 306 may be instructed to construct a web page template for the web page to assist in analyzing other web pages having a similar structure or layout. If the component identifier 306 is instructed to construct a page template (e.g., in the storage device 308), the component identifier 306 generates the template and/or adds the web page component type and location to the corresponding template in the storage device 308 (block 508). An example template in the template table 400 of FIG. 4.

After the component identifier 306 adds the type and location of the component to the template (block 608), or if the component identifier 306 is not instructed to construct a template (block 606), the component identifier 306 determines whether the web page component is a hyperlink (block 610). If the component is a hyperlink (block 610), the component identifier 306 sends the hyperlink to the image generator 302 to add the target address to the web page list 314 to crawl (block 612). In some cases (such as hyperlinks in Flash media), the image generator 302 must begin to load the web page targeted by the hyperlink to ascertain the target address, which is then added to the web page list 314. In contrast, if the hyperlink is defined by HTML or other source code, the image generator 302 simply adds the target address to the web page list 314 by copying the address from the HTML code.

After adding the target address to the list (block 612), or if the component is not a hyperlink (block 610), the component identifier 306 stores the web page component type and location in the storage device 308 (block 614). The component identifier 306 then checks whether there are additional portions of the web page to analyze (i.e., portions identified by the image analyzer 308) (block 616). If there are additional portions to analyze (block 616), control returns to block 604 to analyze the next portion. If there are no remaining portions (block 616), the instructions 600 end and control advances to block 516 of FIG. 5.

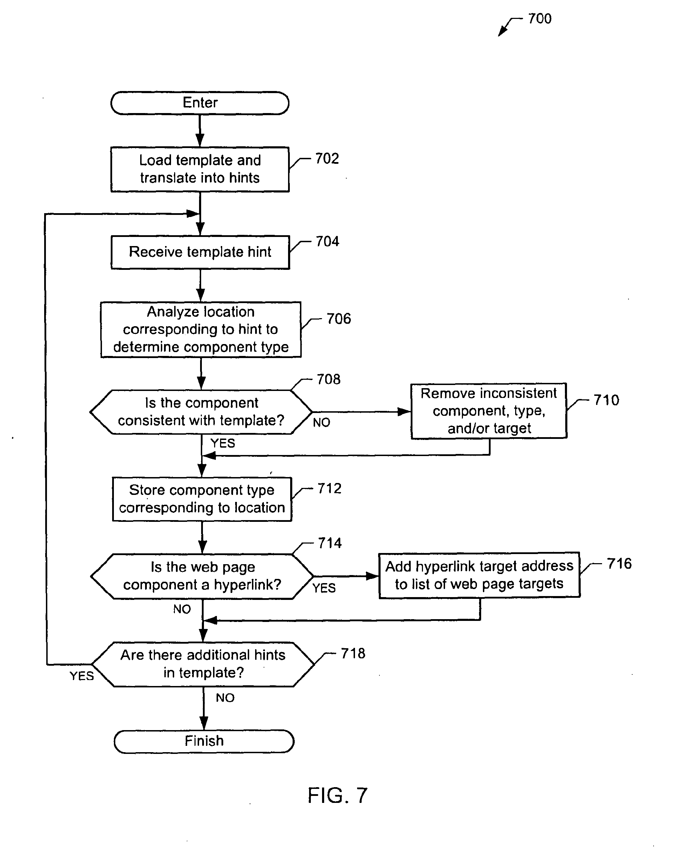

FIG. 7 is a flowchart representative of example machine readable instructions 700 which may be executed to identify types of components in a visually analyzed web page based on a web page template. The example instructions 700 may be executed to implement the example image generator 302, the example image analyzer 304, the example component identifier 306, and/or the example storage device 308 of FIG. 3. Specifically, the instructions 600 may be used to execute block 514 of the example machine readable instructions 500 of FIG. 5 to identify web page components and corresponding types and locations. In this case, the instructions 700 are called from block 514 when there is a template loaded (e.g., in the template reader 310) to analyze the rendered web page 318.

When the example instructions 700 begin, the template reader 310 loads a web page template 320 and the hint analyzer 312 translates the web page template 320 into hints (block 702). Next, the component identifier 306 receives a template hint (block 704). The hint may include, for example, information contained in one of the rows 416-428 of the example table 400 of FIG. 4, or may only include coordinate or range information. The component identifier 306 analyzes the location corresponding to the hint to determine a component type (block 706). The component identifier 306 may analyze the location using image analysis techniques, source code analysis, network traffic analysis, and/or any other means useful to identify the type of a web page component.

Once the component identifier 306 has determine a type of the web page component type (block 706), the component identifier 306 compares the type that was determined with the type that is specified in the template, if one exists (block 708). If the component type determined by the component identifier 306 is not consistent with the component type specified in the template 320, the component identifier 306 removes the type corresponding to the component from the web page template 320. Alternatively, if the component identifier 306 determines that there is no component associated with the coordinates defined by the hint, the component identifier 306 removes the component from the web page template 420 altogether. As another alternative, the component identifier 306 may remove the hyperlink target 414 in the case that the component identifier 306 determines the type is a hyperlink with a first target and the template specifies a hyperlink with a second target (block 710).

After removing an inconsistent type and/or target from the template (block 710), or if the component is determined to be consistent with the template (block 708), the component identifier 306 stores the component type corresponding to the location in the storage device 308 (block 712). The component identifier 306 then determines whether the web page component is a hyperlink (block 714). If the web page component is a hyperlink, the component identifier 306 passes the hyperlink to the image generator 302 to add the hyperlink target address to the list of web page targets (block 716). As described above, the image generator 302 may be required to begin loading the web page targeted by the hyperlink to ascertain the target address if, for example, the hyperlink is within a Flash media component. The target address may also be determined by the source or other code of the web page.

After adding the target address to the list of web page addresses (block 716), or if the component type is not a hyperlink (block 714), the template reader 310, the hint analyzer 312, and/or the component identifier 306 determine whether there are additional hints in the template (block 718). If there are additional hints, control returns to block 704 and the component identifier 306 receives another hint. If there are no additional hints, the example instructions 700 end and control returns to block 516 of FIG. 5.

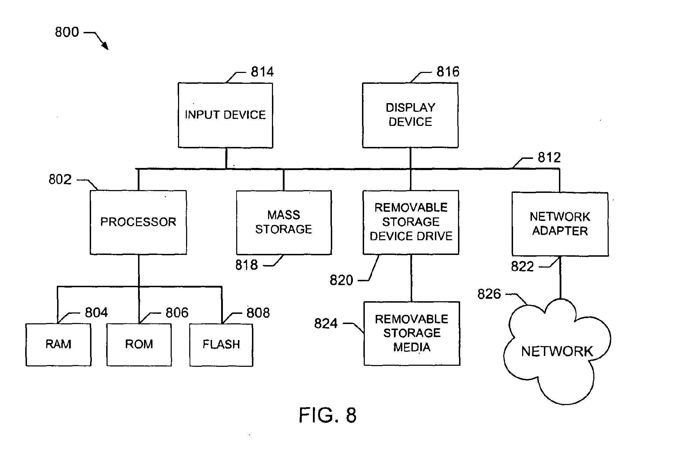

FIG. 8 is a diagram of an example processor system 800 that may be used to execute some or all of the example machine readable instructions 500, 600 and/or 700 described in FIGS. 5-7, to implement any or all parts of the example web crawler 102. The example processor system 800 includes a processor 802 having associated memories, such as a random access memory (RAM) 804, a read only memory (ROM) 806 and a flash memory 808. The processor 802 is coupled to an interface, such as a bus 812 to which other components may be interfaced. In the illustrated example, the components interfaced to the bus 812 include an input device 814, a display device 816, a mass storage device 818, a removable storage device drive 820, and a network adapter 822. The removable storage device drive 820 may include associated removable storage media 824 such as magnetic or optical media. The network adapter 822 may connect the processor system 800 to an external network 826.

The example processor system 800 may be, for example, a desktop personal computer, a notebook computer, a workstation or any other computing device. The processor 802 may be any type of processing unit, such as a microprocessor from the Intel® Pentium® family of microprocessors, the Intel® Itanium® family of microprocessors, and/or the Intel XScale® family of processors. The memories 804, 806 and 808 that are coupled to the processor 802 may be any suitable memory devices and may be sized to fit the storage demands of the system 800. In particular, the flash memory 808 may be a non-volatile memory that is accessed and erased on a block-by-block basis.

The input device 814 may be implemented using a keyboard, a mouse, a touch screen, a track pad, a barcode scanner, an image scanner, or any other device that enables a user to provide information to the processor 802.

The display device 816 may be, for example, a liquid crystal display (LCD) monitor, a cathode ray tube (CRT) monitor or any other suitable device that acts as an interface between the processor 802 and a user. The display device 816 as pictured in FIG. 8 includes any additional hardware required to interface a display screen to the processor 802.

The mass storage device 818 may be, for example, a hard drive or any other magnetic, optical, or solid state media that is readable by the processor 802.

The removable storage device drive 820 may, for example, be an optical drive, such as a compact disk-recordable (CD-R) drive, a compact disk-rewritable (CD-RW) drive, a digital versatile disk (DVD) drive or any other optical drive. It may alternatively be, for example, a magnetic media drive and/or a solid state universal serial bus (USB) storage drive. The removable storage media 824 is complimentary to the removable storage device drive 820, inasmuch as the media 824 is selected to operate with the drive 820. For example, if the removable storage device drive 820 is an optical drive, the removable storage media 824 may be a CD-R disk, a CD-RW disk, a DVD disk or any other suitable optical disk. On the other hand, if the removable storage device drive 820 is a magnetic media device, the removable storage media 824 may be, for example, a diskette or any other suitable magnetic storage media.

The network adapter 822 may be, for example, an Ethernet adapter, a wireless local area network (LAN) adapter, a telephony modem, or any other device that allows the processor system 800 to communicate with other processor systems over a network. The external network 826 may be a LAN, a wide area network (WAN), a wireless network, or any type of network capable of communicating with the processor system 800. Example networks may include the Internet, an intranet, and/or an ad hoc network.

The example systems, methods, apparatus, and articles of manufacture described above are useful for a variety of data applications. For example, the example web crawler may be used to automatically crawl the Internet to build a library of media content. Such a library may then be used to generate digital signatures of the content for use in, for example, digital rights management. After determining the types of content that exist in a particular web page, the web page may be scraped for data, such as media content (e.g., audio, video), advertisements, text, or other types of useful data. By visually determining the types of web page components that are present, media such as Flash content can be identified and scraped.

Another example application for digital rights management includes automatically crawling the web to detect copyright infringement using an established library of digital signatures. The example web crawler may load or generate a template of a media web site such as YouTube, visually identify the components from web pages at the web site including media content, and compare the media content to a library of digital signatures to detect copyrighted content.

Although this patent discloses example systems including software or firmware executed on hardware, it should be noted that such systems are merely illustrative and should not be considered as limiting. For example, it is contemplated that any or all of these hardware and software components could be embodied exclusively in hardware, exclusively in software, exclusively in firmware or in any combination of hardware, firmware and/or software. Accordingly, while the above specification described example systems, methods, apparatus, and articles of manufacture, the examples are not the only way to implement such systems, methods, apparatus, and articles of manufacture. Therefore, although certain example systems, methods, apparatus, and articles of manufacture have been described herein, the scope of coverage of this patent is not limited thereto. On the contrary, this patent covers all systems, methods, apparatus and articles of manufacture fairly falling within the scope of the appended claims either literally or under the doctrine of equivalents.

**Claims**

1. A method to visually identify components of a web page, comprising:

   rendering a web page to generate an image;
   visually analyzing at least a portion of the image with a machine to detect a region containing a possible web page component;
   automatically determining a type of the possible web page component; and
   storing the web page component type and a location of the portion of the web page.

2. A method as defined in claim 1, wherein the type comprises at least one of a button, media content, a media player control, a hyperlink, a text area, an advertisement, an image, or a Flash component.

3. A method as defined in claim 1, wherein automatically determining the type comprises performing image analysis of the region.

4. A method as defined in claim 3, wherein the image analysis comprises at least one of edge detection; image correlation; or initiating an action in the region of the web page, and monitoring to detect a response to the action.

5. A method as defined in claim 3, wherein the at least a portion is a Flash component.

6. A method as defined in claim 1, further comprising generating a web page template corresponding to the web page.

7. An apparatus to identify components in a web page, comprising:

   an image generator to render an image of a web page based on web page information;
   an image analyzer to automatically analyze the image to detect a web page component in the image and to generate location information corresponding to a location of the web page component in the image; and
   a component identifier to automatically determine a type of the web page component by analyzing the image.

8. An apparatus as defined in claim 7, further comprising a template reader to access a web page template.

9. An apparatus as defined in claim 8, further comprising a hint analyzer to identify one or more locations to be analyzed based on the web page template.

10. An apparatus as defined in claim 8, wherein the component identifier is to determine a second component type in a second rendered web page based on location information in the template.

11. An apparatus as defined in claim 10, wherein the component identifier is to modify at least one of the type of the web page component or the location information based on the second component type.

12. A method to visually analyze a web page, comprising:

    rendering a web page to generate an image;
    accessing a hint corresponding to the web page;
    visually analyzing the image based on the hint to automatically determine a type of a web page component; and
    selectively modifying a web page template based on the hint and the type of the web page component.

**13.** A method as defined in claim 12, further comprising accessing the web page template, wherein the web page template comprises a plurality of hints.

**14.** A method as defined in claim 12, further comprising generating the web page template, wherein the web page template comprises a plurality of hints.

**15.** A method as defined in claim 14, further comprising:

rendering a second web page to generate a second image;
accessing a hint from the generated web page template; and
visually analyzing the second image to determine a type of a second web page component corresponding to the hint.

FIG. 1

**FIG. 2**

EP 2 169 566 A1

102

Page List
314

316
Web Page

A/V Signature Database
324

Media identifier
322

Image Generator
302

318
Rendered Web Page

Image Analyzer
304

Component Identifier
306

FLAG
323

Page Template
320

Template Reader
310

Hint Analyzer
312

Storage Device
308

FIG. 3

320

| ID | Component Type | Begin X | End X | Begin Y | End Y | Target |
|---|---|---|---|---|---|---|
| 1 | Hyperlink | 100 | 200 | 25 | 30 | http://www.nielsen.com |
| 2 | Hyperlink | 225 | 325 | 25 | 30 | |
| 3 | Advertisement | 600 | 700 | 50 | 550 | |
| 4 | Button | 100 | 200 | 600 | 610 | |
| 5 | Button | 250 | 330 | 175 | 245 | |
| 6 | Video content | 50 | 530 | 50 | 370 | |

402 404 406 408 410 412 414

416 418 420 422 424 426

FIG. 4

500

```
            ┌─────────────┐
            │    Start    │
            └─────────────┘
                   │
                   ▼
         ┌──────────────────┐
         │ Load list of target │─── 502
         │    web pages     │
         └──────────────────┘
                   │
                   ▼
         ┌──────────────────┐
         │  Select web page  │─── 504
         │    from list     │
         └──────────────────┘
                   │
                   ▼
         ┌──────────────────┐
         │ Call and receive web │─── 506
         │  page information │
         └──────────────────┘
                   │
                   ▼
         ┌──────────────────┐
         │ Render the received │─── 508
         │ web page information │
         └──────────────────┘
                   │
                   ▼
         ╱──────────────────╲ ─── 510
        ╱  Is a template loaded for ╲
        ╲  analyzing the web page? ╱
         ╲──────────────────╱
```

512 —

Identify web page components, types, and locations

514 —

Identify web page component types based on the template

Call media identifier to identify media content in identified media components —— 516

Scrape web page for data —— 518

Additional web pages in the target list? —— 520

YES

NO

Finish

FIG. 5

600

Enter

Analyze rendered web page to
detect portion(s) that may
contain a web page component — 602

Analyze portion to
determine type of — 604
web page component

Is a template to be
constructed for this page? — 606
YES → Add type and location of web — 608
page component to template
NO

Is the web page
component a hyperlink? — 610
YES → Add hyperlink target address — 612
to list of web page targets
NO

Store web page component — 614
type and location

Are there additional — 616
portions of the web page
to analyze?
YES
NO

Return

FIG. 6

700

Enter

Load template and
translate into hints ⟋ 702

Receive template hint ⟋ 704

Analyze location
corresponding to hint to ⟋ 706
determine component type

Is the component
consistent with template? 708          Remove inconsistent
          component, type, ⟋ 710
NO          and/or target

YES

Store component type ⟋ 712
corresponding to location

Is the web page 714          Add hyperlink target address ⟋ 716
component a hyperlink? YES          to list of web page targets

NO

Are there additional hints ⟋ 718
in template?

YES

NO

Finish

FIG. 7

800

814

INPUT DEVICE

816

DISPLAY
DEVICE

812

802

PROCESSOR

MASS
STORAGE

REMOVABLE
STORAGE
DEVICE DRIVE

NETWORK
ADAPTER

818

820

822

804

806

808

824

826

RAM

ROM

FLASH

REMOVABLE
STORAGE
MEDIA

NETWORK

FIG. 8

Europäisches Patentamt

European Patent Office

Office européen des brevets

**EUROPEAN SEARCH REPORT**

Application Number

EP 09 01 2337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEORG BUSCHER, ANDREAS DENGEL, LUDGER VAN ELST, FLORIAN MITTAG: "Generating and using gaze-based document annotations" PROC. AND EXTENDED ABSTRACTS OF THE CONFERENCE ON HUMAN FACTORS IN COMPUTING SYSTEMS (CHI 2008), FLORENZ, ITALY, ACM, [Online] 5 April 2008 (2008-04-05), - 10 April 2008 (2008-04-10) pages 3045-3050, XP002558955 Retrieved from the Internet: URL:http://www.ra.cs.uni-tuebingen.de/mitarb/mittag/publications/mittag2008chi_gazeannotations.pdf> [retrieved on 2009-12-01] * page 3047, left-hand column, last line - page 3049, left-hand column, line 2 * * page 3050, left-hand column, lines 18-28 * | 1-15 | INV. G06F17/30 |
| X | US 2006/041589 A1 (HELFMAN JONATHAN [US] ET AL) 23 February 2006 (2006-02-23) * paragraphs [0024] - [0026], [0039], [0042] * | 1,3,7,12 | |
| | | | TECHNICAL FIELDS SEARCHED (IPC) |
| X | ANTHONY Y FU ET AL: "Detecting Phishing Web Pages with Visual Similarity Assessment Based on Earth Mover's Distance (EMD)" IEEE TRANSACTIONS ON DEPENDABLE AND SECURE COMPUTING, IEEE SERVICE CENTER, NEW YORK, NY, US, vol. 3, no. 4, 1 October 2006 (2006-10-01), pages 301-311, XP011143214 ISSN: 1545-5971 * page 303, left-hand column, line 26 - last line * * page 310, right-hand column, line 21 - last line * | 1,3,7 | G06F |

The present search report has been drawn up for all claims

| Place of search | Date of completion of the search | Examiner |
|---|---|---|
| The Hague | 4 December 2009 | Bykowski, Artur |

**ANNEX TO THE EUROPEAN SEARCH REPORT
ON EUROPEAN PATENT APPLICATION NO.**

EP 09 01 2337

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2009

| Patent document cited in search report | Publication date | Patent family member(s) | Publication date |
|---|---|---|---|
| US 2006041589 A1 | 23-02-2006 | JP 2006107458 A | 20-04-2006 |